Europäisches Patentamt

European Patent Office

Office européen des brevets

(19)

(11) Publication number: **0 120 522**
A1

(12) **EUROPEAN PATENT APPLICATION**

(21) Application number: 84200266.9

(22) Date of filing: 24.02.84

(51) Int. Cl.³: **F 16 N 11/10**
**F 16 N 13/16**

(30) Priority: 17.03.83 IT 2012083

(43) Date of publication of application:
03.10.84 Bulletin 84/40

(84) Designated Contracting States:
AT BE DE FR GB NL SE

(71) Applicant: DROPSA S.p.A.
Via Massimiano 25
I-20134 Milano(IT)

(72) Inventor: Gualtiero, Divisi
Via Massimiano, 25
I-20134 Milano(IT)

(74) Representative: Luksch, Giorgio, Dr.-Ing. et al,
Ing. A. Giambrocono & C. S.r.l. Via Rosolino Pilo, 19/b
I-20129 Milano(IT)

(54) Pneumatically operated pump with pressurised reservoir for lubrication systems, particularly for automotive traction.

(57) A pneumatically operated pump with a pressurised reservoir for grease lubrication systems, particularly for automotive traction, comprising a differential piston (8), of which the larger cross-section is acted upon by a pneumatic pressure, whereas the smaller cross-section (11) acts on the lubricant grease in a chamber (12) which is connected to the points to be lubricated by way of a delivery valve (51), and to a reservoir (5a) (containing grease under pressure) by way of a suction valve (19).

Fig. 1

EP 0 120 522 A1

PNEUMATICALLY OPERATED PUMP WITH PRESSURISED RESERVOIR FOR
LUBRICATION SYSTEMS, PARTICULARLY FOR AUTOMOTIVE TRACTION

This invention relates to a pneumatic pump for lubrication systems,
particularly for trucks, trailers, semitrailers and the like.

The pneumatic pumps currently utilised in the said lubrication systems can be used only with special lubricant greases having a
viscosity which can vary only within fairly restricted limits,
independently of the wide temperature range of the environment
in which the truck or the like operates.  The lubricant greases
used are therefore particularly costly, and are not always easily
obtainable, especially in third world countries.

The object of the present invention is to provide a pneumatic pump
for lubrication systems, particularly for trucks, trailers and
semitrailers, which is able to operate with common low-cost
lubricant greases of almost universal availability, the viscosity
of which can vary within fairly wide limits, while ensuring adequate
lubrication of the various points to be lubricated, such as leaf
springs, steering knuckles etc., under all environmental conditions.

According to the invention, the pneumatic piston pump is characterised essentially by comprising a differential piston, of which
the larger cross-section is acted upon by a pneumatic prsssure,
whereas the smaller cross-section acts on the lubricant grease in
a chamber which is connected to the points to be lubricated by way of a delivery valve, and to a reservoir - in which the grease is contained under pressure - by way of a suction valve.

In this manner, the grease passes from the reservoir, in which it is contained under pressure, through the suction valve and then to the chamber where the smaller cross-section of the differential piston operates, and during the pumping stroke of said piston the grease passes from the chamber to its utilisation points by way of the delivery valve, the suction valve preventing the grease from returning to the reservoir during said compression stage. The reservoir can be recharged through an emergency greasing line connected to the reservoir by way of a non-return valve.

According to an advantageous aspect of the invention, the pump and reservoir constitute one cylindrical body which is divided into two zones by an intermediate element in which the chamber and suction valve are present, said zones being themselves divided into compartments of variable volume by surfaces on which a pneumatic pressure operates, one of which is represented by the larger cross-section of the differential piston and the other by a floating piston which presses against the grease in the reservoir.

The invention will be more apparent from the detailed description of a preferred embodiment given hereinafter by way of non-limiting example and illustrated on the accompanying drawing, in which:
Figure 1 is a diagrammatic axial section through the pump of the invention with the relative conduits for connection to the compressed air and lubricant grease sources;
Figure 2 is a partial section to an enlarged scale on the line II-II of Figure 1; and
Figure 3 is a less diagrammatic axial section through the upper part of the device of Figure 1.

In the figures, the reference numeral 1 indicates overall a cylindrical body closed by two end pieces 2, 3 and divided into two zones by a fixed intermediate element 4. Each zone is divided into two compartments of variable volume, indicated by 5a, b and 6a, b respectively, by the surfaces or faces of the floating piston 7 and by those of a differential piston 8, these being guided in a sealed manner in the cylindrical body 1.

The differential piston 8 has one active face which faces the compartment 6a, is loaded by a compression spring 9 which tends to urge it towards the end piece 3, and possesses a stem 10, the front surface 11 of which constitutes the other active face (of much smaller cross-section) of said differential piston 8. The stem 10 is disposed slidable in a chamber 12 provided centrally in the intermediate element 4, and constituting the actual pumping chamber of the pump.

The chamber 12 is connected to a cylindrical space of greater diameter 13 which is connected to a radial duct 15 and to a member 16 screwed into a central bore 17 of the element 4.

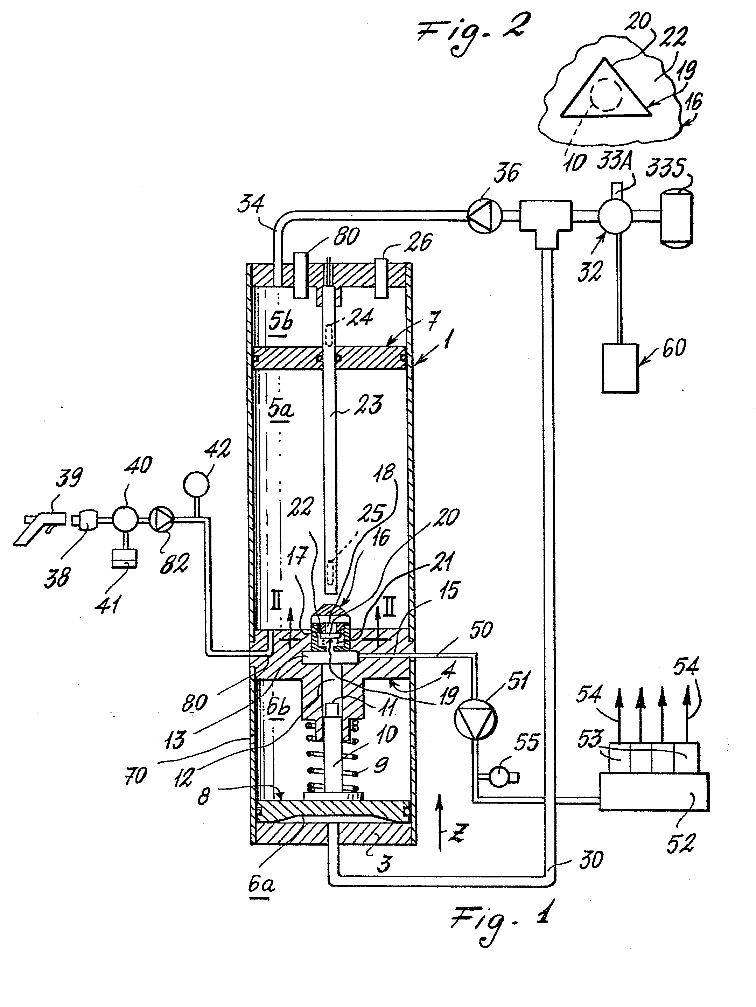

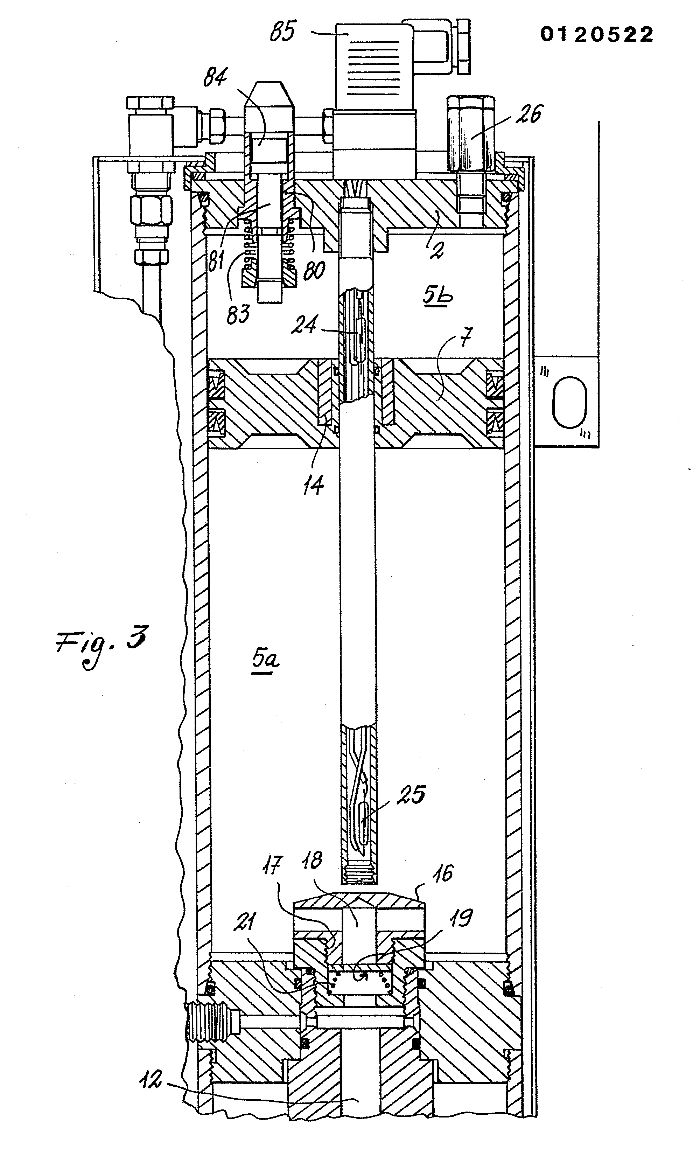

The member 16, which is formed from two or more pieces screwed together, comprises a duct 18 which connects the space 13 to the compartment 5a by way of a valve 19 possessing a valve element 20 loaded by a compression spring 21 which tends to urge it against an internal step 22 of the member 16. More specifically, the valve element is of substantially triangular shape, and (see Figure 2) its dimensions are such as to completely shut off the passage of the grease when it is applied against the step 22.

In the centre of the end piece 2 there is mounted a tube 23 inside which, spaced apart one from the other, there are positioned two proximity switches (reed type) 24, 25, equivalent to two limit switches, which by magnetic action close respective contacts when they are sufficiently closely approached by the floating piston 7, which slides in a sealed manner along said tube 23. In the central part of the piston 7 there is inserted a permanent magnet 14A, which operates the reed switches 24, 25.

In the end piece 2 there is mounted a safety valve 26, which opens when the pressure in the compartment 5b exceeds a predetermined value.

The compartment 6a is connected to a source of compressed air 33S by way of the pipe 30 and a three-way solenoid valve 32.

The compartment 5b is also connected to the source 33S by way of a pipe 34 and a non-return valve 36. The grease is loaded into the compartment 5a through a line 37, from which a pressure relief valve 42 branches. The line 37 comprises a filter 40 to which there are connected both a conventional grease nipple 38 (constituted by a non-return ball valve) to which a normal grease gun 39 present in service stations can be coupled, and to an instant male-female connector 41. The lubricant grease can be loaded into the compartment 5a either through the grease nipple 38 or through the connector 41.

The line 37 is connected by way of a non-return valve 82 to a duct 86 present in the intermediate element 4. The duct 15 of said element 4 is connected to an outlet line 50 which by way of a delivery valve 51 leads to the normal lubrication system shown diagrammatically by the distributors 52, the dispensers 53 connected to the preceding, and the lines 54 which lead to the points to be greased.

A normal grease nipple 55 branches from the line 50, and enables grease to be fed to the utilisation points by means of a normal grease gun 39 should the pneumatic pump not operate, thus enabling the vehicle to be driven to a repair workshop without the danger of damage.

It will now be assumed that the three-way solenoid valve 32 is controlled by a timer 60 which is able to connect the operating compartment 6a for a short but predetermined time to the compressed air source 33S (which can be a compressor with its receiver, operated by the vehicle on which the lubrication system is mounted, or alternatively can be the compressed air system already existing on the vehicle). The compartment 6a can also be connected to atmosphere for a longer but again predetermined time, by way of the third passage 33A of the valve 32. It will finally be assumed that the compartment 5a is filled with grease to a point such that the floating piston 7 is in the position indicated in Figure 1, and that the differential piston 8 is also in the position shown in this figure.

The timer 60 acts on the valve 32 and connects the compartment 6a to a compressed air source 33S. The differential piston 8 then moves in the direction of the arrow Z against the spring 9. The air in the compartment 6b leaves through the hole 70. The grease contained in the chamber 12 is fed at high pressure into the line 50 and reaches the distributors 52 from which it passes to the dispensers 53 and to the utilisation points through the lines 54.

The timer 60 then deactivates the valve 32, by which the compartment 6a becomes connected to atmosphere. The spring 9 returns the floating piston 8 to the position of Figure 1. The valve 19 opens, and a certain quantity of grease under pressure is fed from the compartment 5a to the chamber 12 by the effect of the pressure of the air, which remains pressurised in the chamber 5b.

The operational cycle is repeated when the timer 60 reactivates the valve 32.

The grease contained in the compartment 5a is progressively consumed, and when the floating piston 7 causes the minimum-level proximity switch (reed switch) 25 to operate, the contact 25 closes, to allow an acoustic or optical indication to be obtained on the electrical control panel, or to allow some other circuit function to be obtained.

When, as the result of recharging through the connector 41 or grease nipple 38, the floating piston 7 moves to its upper position, ie to the point at which the maximum-level proximity switch (reed switch) 24 is operated, the contact 24 closes to allow an acoustc or optical indication to be obtained on the electrical control panel, or to allow some other circuit function to be obtained.

In the upper end piece 2 there is mounted a cylinder 80 in which there slides a piston 81 which is kept in the position shown in Figure 3 by the spring 83. When the floating piston 7 moves into its upper position by the effect of loading the grease into the compartment 5a, not only does it produce an electrical signal by way of the contact 24, but also acts on the piston 81, urging it outwards to thus uncover the red-coloured band 84, thus offering a further optical indication of mechanical type.

The electrical connections are made by a connector 85.

It should be noted that the loading of the grease into the compartment 5a is obtained without any further or prior manipulation of the compressed air system, in that the air present in the compartment 5b remains at the pressure defined by the safety valve 26, which gradually unloads any pressure excessive to this value as the piston 7 rises and the compartment 5b reduces in volume.

Although only one embodiment of the invention has been described, it will be easy for an expert of the art, now in possession of the inventive idea, to make numerous modifications thereto, but which must all lie within the scope of the invention itself.

CLAIMS :

1.     A pneumatically operated pump for grease lubrication systems, particularly for automotive traction, characterised by comprising a differential piston (8), of which the larger cross-section is acted upon by a pneumatic pressure, whereas the smaller cross-section (11) operates on the lubricant grease in a chamber (12) which is connected to the points to be lubricated by way of a delivery valve (51), and to a reservoir (5a) - in which the grease is contained under pressure - by way of a suction valve (19).

2.     A pump as claimed in claim 1, characterised in that the reservoir (5a) and the differential piston (8) are contained in a body (1) divided into two parts by an intermediate element (4), in which both the chamber (12) and the suction valve (19) are disposed.

3.     A pump as claimed in claim 2, characterised in that the body (1) is cylindrical, and each of its parts is divided into two compartments of variable volume (5a, 5b; 6a, 6b) by a floating piston (7) and by the differential piston (8) respectively.

4.     A pump as claimed in claim 1, characterised in that one of the compartments (5a) separated by the floating piston (7) constitutes the reservoir, and the other can be connected to the compressed air source (33S).

5.     A pump as claimed in one or more of the preceding claims, characterised in that one of the compartments (6a) separated by the differential piston (8) can be connected to the compressed air source (33S) by way of a solenoid valve (32) controlled by a programmer (60).

6.     A pump as claimed in claim 1, characterised in that the other compartment (5b) separated by the floating piston (7) can be connected to the compressed air source (33S).

7.      A pump as claimed in claim 1, characterised in that the compartment (5a) is connected by way of a non-return valve (82) to means (38, 41) through which lubricant grease can be loaded.

8.      A pump as claimed in one or more of the preceding claims, characterised in that the position of the floating piston (7) is determined by proximity means (24, 25, 81) which indicate the quantity of grease in the reservoir (5a).

Fig. 2

Fig. 1

0120522

Fig. 3

0120522

## EUROPEAN SEARCH REPORT

European Patent Office

EP 84 20 0266

### DOCUMENTS CONSIDERED TO BE RELEVANT

| Category | Citation of document with indication, where appropriate, of relevant passages | Relevant to claim | CLASSIFICATION OF THE APPLICATION (Int Cl.³) |
|---|---|---|---|
| X | GB-A- 637 883 (WAKEFIELD)<br>* Page 2, lines 103-109; page 3, lines 67-102, 119-126; page 4, lines 33-43, 70-77; figures * | 1,2 | F 16 N 11/10<br>F 16 N 13/16 |
| Y | | 3,4,6,7 | |
| | --- | | |
| Y | DE-C- 585 020 (KRÖSSWANG)<br>* Page 2, lines 13-17; figure 1 * | 3 | |
| | --- | | |
| Y | DE-C- 742 730<br>(SIEBEL-FLUGZEUGWERKE)<br>* Page 1, lines 1-5; figures * | 4,6 | |
| | --- | | |
| Y | GB-A- 23 817 (LOBNITZ) A.D. 1912<br>* Page 2, lines 31-37; figure 1 * | 7 | TECHNICAL FIELDS SEARCHED (Int. Cl.³) |
| | --- | | F 16 N |
| A | CH-A- 310 320 (VOGEL)<br>* Page 1, line 53 - page 2, line 9; figure 1 * | 5 | |
| | --- | | |
| A | GB-A- 299 267 (CONRAD)<br>* Page 1, lines 22-34; figures * | 8 | |
| | --- | | |
| A | US-A-1 731 159 (COURCIER) | | |
| | ----- | | |

The present search report has been drawn up for all claims

| Place of search | Date of completion of the search | Examiner |
|---|---|---|
| THE HAGUE | 13-06-1984 | KOOIJMAN F.G.M. |